# EUROPEAN PATENT APPLICATION

(11) **EP 4 814 475 A1**
(43) Date of publication of application: **30.09.2026**
(21) Application number: 25166314.2
(22) Date of filing: 26.03.2025
(51) Int. Cl.: G01N 21/35, G01N 21/47

(54) **OPTICAL FIBER SPECTROSCOPY FOR CONDITION ASSESSMENT OF INSULATION IN OIL IMMERSED POWER EQUIPMENTS, LIKE TRANSFORMERS**

(71) Applicant: Hitachi Energy Ltd, 8050 Zürich (CH)
(72) Inventor: GORLA, Mahidhar, 771 33 Ludvika (SE); HAJEK, Jan, 777 32 Smedjebacken (SE); PENAYO, Francisco, 777 93 Soderbarke (SE); VOLOVIKOV, Valeriy, 352 59 Växjö (SE); LINDBLOM, Sven Magnus, 138 33 Alta (SE)
(74) Representative: Vossius & Partner Patentanwälte Rechtsanwälte mbB

(57) **Abstract**

The disclosure provides a method for determining a moisture content of cellulose material of an insulation structure of an oil immersed power equipment, the method comprising: incident light onto the cellulose material; sensing light reflected by the cellulose material; and determining the moisture content of the cellulose material based on the sensed light and the incident light.

## Description

The present disclosure relates to a method for determining a moisture content of cellulose material of an insulation structure of an oil immersed power equipment and an oil immersed power equipment system.

The main problem encountered in the oil immersed power equipment, like transformer. production regards the determination of the dryness of the insulation at different locations. In transformer production process, vapor phase drying is the most efficient way of drying. The process monitors many different paraments and based on the overall water extraction rate of the process, an end of the process is determined. Different methods of real time moisture measurements in the form of dielectric response measurements are also used but are never used to full extent due to the complexity in usage and interpretation of their results. Even though the overall active part is close to totally dry, some of the insulation parts are slightly more moist than others. During the transformer production process, the insulation system and active part gets exposed to environmental moisture, and this leads to increase in residual moisture. This increased moisture levels may sometime lead to test failures. Hence, it is of interest to monitor the moisture levels in the transformer.

Higher overall moisture content can also accelerate the ageing process of the insulation structure due to hydrolysis reactions which further creates a chain reaction that accelerate the ageing process leading to overall reduction in life of the transformer. Hence, it is very critical for the transformer manufacturers to monitor and control the moisture content in the insulation structure for higher quality of the product. Because of the insulation ageing process, there is degradation of the cellulose material and this leads to lowering of the degree of polymerization. There is currently no direct means to measure the degree of polymerization when the transformer is under operation. Using the data of temperature together with the moisture directly at different locations may help model the ageing behavior and will be much more precise and accurate than any of the existing ageing models. Hence, the method of this disclosure may be applicable in both production as well as operation of the transformer during its lifetime.

The above-mentioned disadvantages are at least partly overcome and/or advantages mentioned herein are at least partly achieved with the features of the independent claims. Dependent claims define preferred embodiments of the present disclosure.

The present disclosure relates to a method for determining a moisture content of cellulose material of an insulation structure of an oil immersed power equipment, the method comprising: incident light onto the cellulose material; sensing light reflected by the cellulose material; and determining the moisture content of the cellulose material based on the sensed light and the incident light.

The oil immersed power equipment may be a transformer or a reactor or the like. In this disclosure, generally the example of the transformer is used. Still, the disclosure may also be applied to other oil immersed power equipment including the general term of "oil immersed power equipment".

The reflected light, which is sensed, (sensed light) is preferably a reflection of the light incident onto the cellulose material (also shined light). The incident light may also or alternatively be light shined onto the cellulose material and/or light emitted towards the cellulose material. When this disclosure speaks of shined light and/or shining light, the incident light or incident light, respectively, is meant. The reflection may absorb different wavelengths in different extends, depending by what material it is reflected: water or cellulose. This changes the light intensity in the different wavelengths to different extends. The ratio of absorbed light at one or more specific wavelengths between the sensed light and the incident light may then be used to determine the moisture content. The direct moisture content may be measured in the cellulose material. The light may not be limited to specific wavelengths. Light does not necessarily mean visible light.

Each type of material having a certain chemical composition, when under exposure to a wide bandwidth of light, the molecules in the material absorb certain characteristic wavelengths and reach an excited vibrational state. Hence, the reflected light does not have or at least has less of the light at the wavelengths absorbed by the molecules. This is characteristic for each type of molecule and chemical compounds.

Moisture attaches to cellulose. The measurement of the moisture content in the above disclosed manner is more exact than a different moisture measurement in transformer oil. The above disclosed method may achieve sensitivity of 0.5% by weight of moisture content or less. While it is generally said that 99% of the moisture is in the cellulose and 1% in the oil, this is never exact and at perfect equilibrium. In transformers, it may be tried to limit the moisture content to be less than 0.5% by weight of insulation weight. Therefore, measuring moisture in the oil and therefrom concluding the moisture content in the cellulose is less exact.

Cellulose material, or short cellulose, may be made of paper and/or of press board. The cellulose material may be used as electric insulation in the transformer. As such, cellulose material is more cost effective, especially compared to alternatives as polymers. The method is also fast, cheap and safe.

With the disclosed method, the moisture content may be measured during production (for example during drying), during operation (of the transformer) or at other times. During production may be during production of the transformer system and/or during production of the insulation structure.

Various embodiments may preferably implement the following features.

Preferably, the light incident onto the cellulose material has a wavelength in the near infra-red (NIR) spectrum.

Preferably, the light incident onto the cellulose material has a spectrum of wavelengths of the near infra-red, NIR, spectrum

Some of the typical wavelengths where water (H₂O) molecules absorb the light are: 950-980 nm, 1190 nm, 1450 nm, 1920-1940 nm. Preferably, at least one of these wavelengths is comprised by the wavelengths of the light incident onto the cellulose material. The wavelengths of the light incident onto the cellulose material may further comprise wavelengths which are absorbed by (transformer) oil (may be any applicable oil, transformer oil is one example mentioned in this disclosure) and/or cellulose. In some embodiments, the wavelengths of cellulose, oil and water are superimposed on each other. Having one or more wavelengths absorbed by water and other one or more wavelengths absorbed by cellulose may help the determining of the moisture content more exactly. The same applies when having one or more wavelengths not absorbed by water, cellulose and transformer oil. The reflected light of these other wavelengths may give a comparison to the water absorbed wavelengths. The incident light may be created by radiation and/or a laser.

Preferably, the insulation structure is entirely made of cellulose material.

In this manner, the light will only be reflected on cellulose material and moisture (water). This minimizes the error due to influences of other materials, possibly absorbing other wavelengths.

Preferably, the light incident onto the cellulose material is led through a first optical fiber; and wherein the light reflected by the cellulose material is led through a second optical fiber (after being reflected).

Optical fibers are simple, compatible even under high voltages, chemical stable and can perform real time measurements. The disclosed method may be done in real time and real time moisture content may be determined.

Optical fibers may also be used for temperature sensors, the same fibers may be used for both measurements. Alternatively, different fibers, of same or similar make, are used for the different measurements. The different fibers may be bundled at parts of their extend. This may save space and make producing the system easier. Alternatively or additionally, additional chemical analysis may be performed over the same or similar optical fibers.

One or more of the optical fibers may terminate against a surface of the cellulose material, preferably a hole (may be the cavity), maybe drilled hole, into the cellulose material, potentially the insulation structure.

Preferably, the first optical fiber is different to the second optical fiber.

Multimode fibers may be used where a group of first optical fibers may act as a light source and another group of second optical fibers may act as a receiver. The characteristic change in the optical spectroscopic response may be tracked continuously to estimate the moisture content in cellulose materials. The sensors (sensor unit) at the other side of the optical fibers (at the side of the optical fibers opposite to the end at/in the cellulose material; outside of the tank) may additionally be used to analyze transformer oil for moisture and other degradation products, etc.

There may be a plurality of first optical fibers and/or a plurality of second optical fibers. There may be an optical fiber cable as a bundle of optical fibers (m+n - being the total number of fibers in the main optical fiber cable) which may be bifurcated again into two optical fiber cables. One first optical fiber cable contains a set of bundled fibers (m) which are used for shining the light and another second optical fiber cable containing a set of bundled fibers (n) which are used for receiving. In an embodiment, there may be six first optical fibers (m=6) and one second optical fiber (n=1). The number of optical fibers can be varied to improve the sensitivity of the measurement.

Preferably, the method further comprises determining an aging condition of the oil immersed power equipment (transformer in some mentioned examples) comprising the insulation structure based on the moisture content determined.

Determining the aging condition may be further based on temperature. This temperature may be measured by another setup or by also using the same optical fibers. Determining the aging condition may help to determine when to exchange the transformer.

Preferably, determining the moisture content in the cellulose material based on the sensed light and the incident light is done by NIR spectroscopy.

The present disclosure also relates to an oil immersed power equipment system comprising: an insulation structure made of cellulose material, wherein the insulation structure surrounds a space configured to hold windings, and wherein the insulation structure has a cavity in the cellulose material, wherein the cavity is different to the space; and an optical fiber, wherein one end of the optical fiber is emerged in the cavity.

The oil immersed power equipment system may be used to implement the disclosed method. The insulation structure may be part or may be a oil immersed power equipment of the oil immersed power equipment system. The oil immersed power equipment may be a transformer or a reactor or the like. In this disclosure, generally the example of the transformer is used. Still, the disclosure may also be applied to other oil immersed power equipment including the general term of "oil immersed power equipment".

The Insulation structure may be majorly or entirely made of cellulose materials configured to create distances between windings and winding conductors. The cellulose material may be thick and may have a high density. There may be one of multiple varieties of cellulose based insulating parts. Like, papers, molded low density, high density, laminated boards, laminated wood, etc. The density may be 0.6 g/c.c and above. The thickness may be in the range of 1mm to 500 mm, preferably 50mm to 500 mm, further preferably 100mm to 500mm, further preferably 200mm to 400mm. The insulation structure may laminate and may be used as mechanical support to provide mechanical stability to the windings and the insulation structure around them. To construct the transformer system, the whole component of winding and insulation structure may be mounted on a steel core and then placed in a tank. Then, the transformer oil may be filled in the tank to impregnate cellulose pores in the cellulose material with oil. The insulation structure may have other polymer materials like Glass fiber reinforced plastics. A tip of the optical fiber cable may be placed inside the parts of the insulation structure by creating a cavity in it. There may be more than one optical fiber, as described above, with an end each in the cavity.

The optical fiber(s) may be installed in this manner during production of the transformer system. The end(s) of the optical fiber(s) may be installed in the cavity in such a way that the optical fiber(s) may not be exchanged without destruction of the cellulose material. The optical fiber(s) may be molded into the cellulose material, so that the molding around the optical fiber(s) creates the cavity. There may be several cavities, each for one or more of the potential plurality of optical fibers. The cavity may be drilled.

Preferably, the one end of the optical fiber touches the cellulose material.

Preferably, the one end of the optical fiber emerged in the cavity is fully enclosed by the cellulose material.

The end of the optical fiber may be sealed in the cavity such that no transformer oil or other material may enter and pollute the measurement. In some embodiments, the cellulose is porous. Hence, the transformer oil may fill the pores and get in contact to the optical fiber end. This may not pollute the result but the analysis of the results will be different from the case where there was no oil.

Preferably, the cavity has only one opening.

Through this opening, the optical fiber may enter. The opening may be just big enough to fit the optical fiber(s). The cavity may not be a through-hole.

Preferably, the oil immersed power equipment system further comprises a tank in which the insulation structure is positioned, wherein the tank comprises a feed through for the optical fiber.

Especially in the example of a transformer as oil immersed power equipment: The tank may enclose the insulation structure, the windings of the transformer and the iron core of the transformer. The tank may be filled with transformer oil, impregnating especially the insulating structure, preferably impregnating the cellulose material from the inside and outside. The tank may be made of a material different to the insulation structure, like metal (tank may be made of metal). The feed through may be an optical fiber feedthrough or a bushing.

The described advantages of the aspects are neither limiting nor exclusive to the respective aspects. An aspect might have more advantages, not explicitly mentioned.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

The above and other aspects and their implementations are described in greater detail in the drawings, the descriptions, and the claims.
Fig. 1 shows a transformer system according to an embodiment.
Fig. 2 shows a method for determining a moisture content of cellulose material of an insulation structure of a transformer.

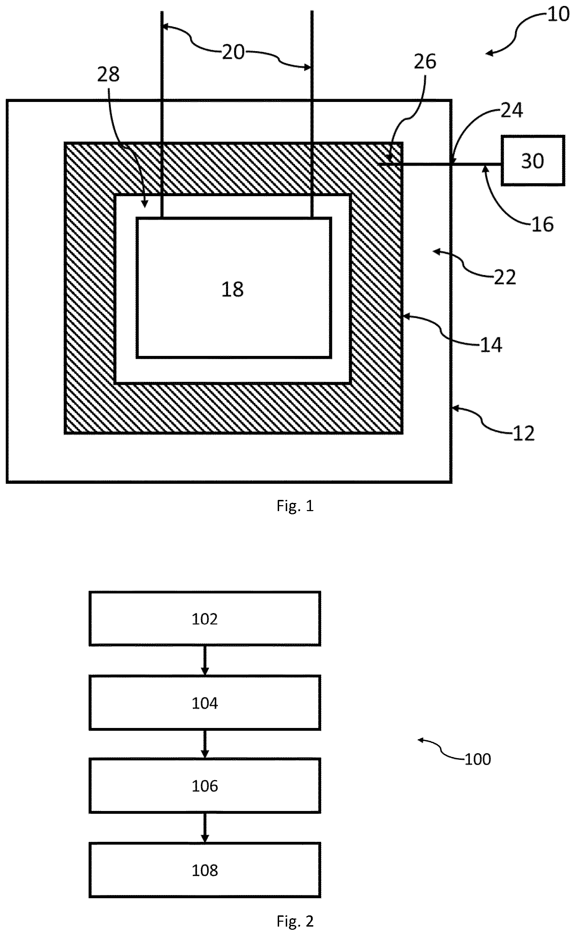

Fig. 1 shows a transformer system 10 according to an embodiment. The transformer system 10 comprises a tank 12, an insulation structure 14 made of cellulose material (shown as shaded area), one or more optical fibers 16, a transformer 18 and electrical connections 20 to the transformer 18. The transformer 18 may comprise windings and an iron core (both not explicitly shown). A sensor unit 30 is further shown in this figure. In this disclosure, generally the example of the transformer is used. Still, the disclosure may also be applied to other oil immersed power equipment including the general term of "oil immersed power equipment".

The tank 12 is filled with transformer oil 22. The transformer oil 22 may also impregnate (immerse) the transformer inside the insulation structure 14. Hence, the insulation structure 14 may also be filled with transformer oil 22. The tank comprises a feed through 24 for the one or more optical fibers 16. Preferably, the tank 12 is sealed such that the transformer oil 22 cannot spill out of the tank 12.

The insulation structure 14 comprises a cavity 26 and a space 28 holding the transformer 18. The insulation structure 14 may be entirely made of cellulose material. Alternatively, the insulation structure 14 may further comprise components like fiber glass plastics and/or polyester and/or other glue laminates. The insulation structure 14 may have an open side or other openings. The insulation structure 14 may not be sealed. The cavity may be drilled or created by molding the cellulose material around end(s) of the one or more optical fibers 16. The insulation structure may contain one or more of several insulation parts that may be used to create clearances between high voltage windings. Any one or more of these parts may be the cellulose material, preferably with the cavity for the optical fiber(s). Some examples of the insulation structure parts are: high density pressboard material spacers which may be used to create distance between turns of a winding. There may be molded pressboard materials that may be used to isolate one coil from another and tank. There may be high density laminated insulation materials that may provide mechanical stability to the windings, etc. Some selected insulating parts may be modified to hold the end of the optical fiber.. The moisture may be measured in such selected insulation parts only.

The transformer 18 is connected to electrical connections 20. The electrical connections 20 pass through the insulation structure 14 and the tank 12. There may be more electrical connections 20 than the two electrical connections 20 shown. The electrical connections 20 may pass through the tank 12 through bushings (not shown in the figure).

The sensor unit 30 is connected to the end of the one or more optical fibers 16 not in the cavity 26. The sensor unit 30 may comprise a light source and a light sensor. The light sensor may be sensible for specific wavelengths, as the wavelengths of absorption of water, and possibly also the wavelengths of absorption of cellulose and/or transformer oil. The light source may emit at least or exclusively the corresponding same wavelengths. The sensor unit 30 may comprise or be a NIR spectrometer. The sensor unit 30 may further determine the moisture content.

Fig. 2 shows a method 100 for determining a moisture content of cellulose material of an insulation structure of an oil immersed power equipment. The method 100 comprises several steps: In step 102, light is incident onto the cellulose material. In step 104, light reflected by the cellulose material is sensed. In step 106, the moisture content of the cellulose material is determined based on the sensed light and the incident light. The method 100 may further comprise step 108. In step 108, an aging condition of the oil immersed power equipment comprising the insulation structure is determined based on the moisture content determined. There may further be steps of data storage and/or data analysis.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A method for determining a moisture content of cellulose material of an insulation structure of an oil immersed power equipment, the method comprising:
incident light onto the cellulose material;
sensing light reflected by the cellulose material; and
determining the moisture content of the cellulose material based on the sensed light and the incident light.

2. The method of claim 1, wherein the light incident onto the cellulose material has a wavelength in the near infra-red, NIR, spectrum.

3. The method of claim 2, wherein the light incident onto the cellulose material has a spectrum of wavelengths of the near infra-red, NIR, spectrum

4. The method of any of claims 1 to 3, wherein the insulation structure is entirely made of cellulose material.

5. The method of any of claims 1 to 4, wherein the light incident onto the cellulose material is led through a first optical fiber; and
wherein the light reflected by the cellulose material is led through a second optical fiber.

6. The method of claim 5, wherein the first optical fiber is different to the second optical fiber.

7. The method of any of claims 1 to 6, the method further comprising:
determining an aging condition of the oil immersed power equipment comprising the insulation structure based on the moisture content determined.

8. The method of any of claims 1 to 7, wherein determining the moisture content in the cellulose material based on the sensed light and the incident light is done by NIR spectroscopy.

9. An oil immersed power equipment system comprising:
an insulation structure made of cellulose material, wherein the insulation structure surrounds a space configured to hold windings, and wherein the insulation structure has a cavity in the cellulose material, wherein the cavity is different to the space; and
an optical fiber, wherein one end of the optical fiber is emerged in the cavity.

10. The oil immersed power equipment system of claim 9, wherein the one end of the optical fiber touches the cellulose material.

11. The oil immersed power equipment system of claim 9 or 10, wherein the one end of the optical fiber emerged in the cavity is fully enclosed by the cellulose material.

12. The oil immersed power equipment system of any of claims 9 to 11, wherein the cavity has only one opening.

13. The oil immersed power equipment system of any of claims 9 to 12, further comprising a tank in which the insulation structure is positioned, wherein the tank comprises a feed through for the optical fiber.
